# EUROPÄISCHE PATENTANMELDUNG

(11) **EP 4 592 099 A1**
(43) Veröffentlichungstag der Anmeldung: **30.07.2025**
(21) Anmeldenummer: 25150613.5
(22) Anmeldetag: 08.01.2025
(51) Int. Cl.: B60C 19/08, B60C 9/20

(54) **GÜRTELLAGE UND GÜRTELVERBAND FÜR EINEN FAHRZEUGREIFEN UND VERFAHREN ZUR HERSTELLUNG**

(30) Priorität: 29.01.2024 DE 102024200740
(71) Anmelder: Continental Reifen Deutschland GmbH, 30175 Hannover (DE)
(72) Erfinder: Würger, Marco, 30175 Hannover (DE); Wenckel, Mathias, 30175 Hannover (DE)
(74) Vertreter: Continental Corporation

(57) **Zusammenfassung**

Gürtellage (10, 10a, 10b) für einen Fahrzeugreifen (30), wobei die Gürtellage (10, 10a, 10b) in eine Gummimischung (11, 12) eingebettete Festigkeitsträger (13, 13a, 13b) umfasst, wobei die Gummimischung (11) in einem ersten Abschnitt (1, 1a, 1b) der Gürtellage (10, 10a, 10b) elektrisch nicht leitfähig ist.

Die Gummimischung (12) ist in einem zweiten Abschnitt (2, 2a, 2b) der Gürtellage (10, 10a, 10b) elektrisch leitfähig.

## Beschreibung

Die Erfindung betrifft eine Gürtellage für einen Fahrzeugreifen, wobei die Gürtellage in eine Gummimischung eingebettete Festigkeitsträger umfasst, wobei die Gummimischung in einem ersten Abschnitt der Gürtellage elektrisch nicht leitfähig ist.

Es ist zunehmend üblich, zur Verringerung eines Rollwiderstandes von Fahrzeugreifen rollwiderstandsarme Gummimischungen einzusetzen, wobei die rollwiderstandsarmen Gummimischungen oft einen höheren spezifischen elektrischen Widerstand aufweisen als herkömmliche Gummimischungen. Üblich ist beispielsweise, als Füllstoff in einer Gummimischung Silica anstelle von Ruß zu verwenden, wodurch ein vorteilhaft niedriger Rollwiderstand erreicht werden kann, jedoch ein hoher elektrischer Widerstand zwischen Fahrbahnuntergrund und Felge entstehen kann.

Es gilt somit, elektrische Brücken im Fahrzeugreifen herzustellen, die beispielsweise auch zwischen Fahrbahnuntergrund und Felge angeordnete Gürtellagen überwinden müssen, wenn die Gürtellagen einen zu hohen elektrischen Widerstand aufweisen. US 2011/0174420 A1 beschreibt einen Luftreifen, der einen Scheitelverstärkungsgürtel aufweist, der von einer Vielzahl von Verstärkungslagen gebildet wird, die übereinandergelegt sind, wobei jede Verstärkungslage aus der Umfangswicklung eines oder mehrerer Lagenabschnitte resultiert, die zueinander parallele Drähte enthalten, die in eine schwach elektrisch leitende Kautschukmischung eingebettet sind, wobei die Seiten der Umfangsenden der Abschnitte stumpf aneinandergelegt werden, um eine Stoßverbindung zu formen, wobei ein elektrisch leitendes, durchgehendes lineares Element in Umfangsrichtung auf dem radial oberen Teil jeder der Lagen umläuft und vom radial oberen Teil einer ersten Verstärkungslage zum radial oberen Teil einer zweiten Verstärkungslage übergeht, die direkt über ihm liegt, indem es zwischen den zwei Seiten einer Stoßverbindung der zweiten Verstärkungslage durchgeht.

Der Erfindung liegt die Aufgabe zugrunde, eine Gürtellage und einen Gürtelverband für einen Fahrzeugreifen sowie einen Fahrzeugreifen zu schaffen, wobei die Gürtellage zu einem möglichst niedrigen Rollwiderstand und elektrischen Widerstand des Fahrzeugreifens beitragen soll und wobei darüber hinaus eine hohe Festigkeit erzielt werden soll. Außerdem soll ein Verfahren zur Herstellung einer Gürtellage in einem solchen Fahrzeugreifen geschaffen werden, wobei der Reifenaufbau insgesamt vereinfacht werden soll.

Die gestellte Aufgabe wird erfindungsgemäß dadurch gelöst, dass die Gummimischung in einem zweiten Abschnitt der Gürtellage elektrisch leitfähig ist.

Durch die Erfindung wird der Zielkonflikt zwischen einem geringem Rollwiderstand und einem ausreichenden elektrischen Leitwert auf hohem Niveau sowie auf industriell gut skalierbare Weise gelöst. Durch den Einsatz einer zusammenhängenden Gürtellage mit leitenden und nichtleitenden Abschnitten kann auf komplexe mehrteilige Anordnungen verzichtet werden, wodurch der Fahrzeugreifen an Stabilität und die Herstellung des Fahrzeugreifens an Effizienz gewinnen.

Sofern die Richtungsbezeichnungen axial, in Axialrichtung, radial, in Radialrichtung und in Umfangsrichtung verwendet werden, beziehen sich diese auf den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 180° Umdrehung des Fahrzeugreifens früher einen minimalen Abstand zum Fahrbahnuntergrund als eine in Umfangsrichtung hintere Position. Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, welche durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht. Die beschriebenen Richtungs- und Positionsangaben können auch auf eine Gürtellage und/oder auf einen Gürtelverband angewendet werden. Die Angaben sind als absolute Angaben in Bezug auf ein Szenario zu verstehen, gemäß welchem die Gürtellage bzw. der Gürtelverband bestimmungsgemäß in einem Fahrzeugreifen verbaut sind. Für den Fall einer separaten Gürtellage bzw. eines solchen Gürtelverbands sind die Angaben relativ zu der Gürtellage bzw. dem Gürtelverband so zu verstehen, wie wenn die Gürtellage bzw. der Gürtelverband bestimmungsgemäß in dem Fahrzeugreifen verbaut wären.

Die mit den Merkmalen des Hauptanspruchs erzielten Effekte werden durch bevorzugte Ausführungsformen und Ausgestaltungen unterstützt und weiter verstärkt.

Eine Definition einer elektrisch leitfähigen bzw. nicht elektrisch leitfähigen Gummimischung ist zunächst relativ zu formulieren, dahingehend, dass ein spezifischer Widerstand nach Vulkanisation in der elektrisch leitfähigen Gummimischung kleiner ist als in der elektrisch nicht leitfähigen Gummimischung. Eine Grenze zwischen elektrisch leitfähiger und nicht leitfähiger Gummimischung kann in absoluten Zahlen dahingehend ausgedrückt werden, dass eine elektrisch leitfähige Gummimischung einen spezifischen Widerstand bis 1 × 10¹² Ω cm, vorzugsweise bis 1 × 10⁷ Ω cm aufweist und dass eine elektrisch nicht leitfähige Gummimischung einen spezifischen Widerstand > 1 × 10¹² Ω cm, in einer anderen Ausführungsform > 1 × 10⁷ Ω cm aufweist, wobei der spezifische Widerstand der elektrisch leitfähigen Gummimischung kleiner als jener der elektrisch nicht leitfähigen Gummimischung ist. Die große Spanne der angegebenen Grenzwerte ergibt sich unter anderem aus der Variationsmöglichkeit der Geometrien von in einem Fahrzeugreifen einsetzbaren Baugruppen: Je dicker beispielsweise die Gürtellage in dem zweiten Abschnitt ist, desto kleiner muss der spezifische Widerstand der leitfähigen Gummimischung sein, um einen gegebenen Widerstand zum Überwinden der Gürtellage nicht zu überschreiten; je größer beispielsweise die Kontaktfläche zwischen dem zweiten Abschnitt der Gürtellage und weiteren Komponenten einer elektrischen Brücke durch den Fahrzeugreifen, desto größer darf der spezifische Widerstand der leitfähigen Gummimischung sein, um einen gegebenen Widerstand auf einem Weg zwischen Fahrbahn und Felge noch unterschreiten zu können. Alternativ oder zusätzlich kann der konkrete Anwendungsfall der Erfindung Auswirkungen auf sinnvolle Grenzwerte zur Definition einer elektrisch leitfähigen bzw. nicht leitfähigen Gummimischung haben. Beispielsweise darf der Ableitwiderstand eines Reifens, der nach WDK Norm 110/ISO 16392 als leitfähig eingestuft ist, einen Wert von 1 × 10⁶ Ω nicht überschreiten; für diesen Fall weist die elektrisch leitfähige Gummimischung vorzugsweise einen spezifischen Widerstand von < 1 × 10⁷ Ω cm auf. Beispielsweise ist für die Erstausstattung von Fahrzeugen, beispielsweise auf dem europäischen Markt, ein Grenzwert des Widerstands zwischen Fahrbahn und Felge von 1 × 10⁸ Ω üblich; in diesem Fall weist die elektrisch leitfähige Gummimischung vorzugsweise einen spezifischen Widerstand von < 1 × 10¹⁰ Ω cm auf. Beispielsweise darf der Ableitwiderstand eines Reifens, der nach WDK Norm/ISO 16392 als "dissipativ" eingestuft ist, einen Wert von 1 × 10¹⁰ Ω nicht überschreiten; in diesem Fall weist die elektrisch leitfähige Gummimischung vorzugsweise einen spezifischen Widerstand von < 1 × 10¹² Ω cm auf.

Vorzugsweise zeichnet sich die Gummimischung in dem ersten Abschnitt durch eine geringe Hysterese aus. Vorzugsweise wird mit der Gummimischung in dem ersten Abschnitt eine bessere Eignung zur Minimierung des Rollwiderstands des Fahrzeugreifens erzielt als mit der Gummimischung in dem zweiten Abschnitt. Auf diese Weise kann der erste Abschnitt auf einen guten Rollwiderstand und der zweite Abschnitt auf elektrische Leitfähigkeit optimiert werden, wobei kraft der durch beide Abschnitte verlaufenden Festigkeitsträger eine durchgehend hohe Festigkeit in beiden Abschnitten gegeben ist. Ein geeigneter Füllstoff für die Gummimischung in dem ersten Abschnitt ist Silica.

Die Festigkeitsträger in der Gürtellage können Stahl umfassen und bestehen vorzugsweise, abgesehen von der sie einbettenden Gummierung, aus Stahl. Die Einbettung der Festigkeitsträger in die Gummimischungen kann auf an sich bekannte Weise, beispielsweise anhand eines Kalanders erfolgen.

In einer bevorzugten Ausführungsform der Gürtellage verläuft eine Grenze zwischen dem ersten Abschnitt und dem zweiten Abschnitt parallel zu einem Verlauf der Festigkeitsträger in dem ersten Abschnitt und dem zweiten Abschnitt. Wenn die Festigkeitsträger beispielswiese in einem Winkel zwischen 18° und 32° zur Axialrichtung bzw. zur Breitenrichtung der Gürtellage verlaufen, kann die Grenze unter der genannten Steigung über die gesamte Breite der Gürtellage verlaufen. Auf diese Weise wird die Festigkeit der Gürtellage nicht durch Unterbrechungen der Festigkeitsträger beeinträchtigt. Weiterhin lässt sich eine Gürtellage mit entsprechendem Grenzverlauf besonders effizient herstellen, wie im Rahmen der vor und/oder nachstehenden Beschreibung des erfindungsgemäßen Verfahrens erkennbar ist.

Der erste Abschnitt und/oder der zweite Abschnitt können jeweils streifenförmig ausgebildet sein, in dem Sinne, dass sie in Umfangsrichtung eine im Wesentlichen konstante Breite aufweisen. Der erste Abschnitt kann eine größere Umfangserstreckung haben als der zweite Abschnitt. Die Umfangserstreckung des ersten Abschnitts kann zwischen 1 mal und 20 mal, vorzugsweise zwischen 2 mal und 10 mal der Umfangserstreckung des zweiten Abschnitt entsprechen. Auf diese Weise können eine ausreichende Leitfähigkeit erzielt und gleichzeitig ein sehr guter Rollwiderstand aufrechterhalten werden.

Der erste Abschnitt der Gürtellage kann in Umfangsrichtung zu beiden Seiten an einen zweiten Abschnitt der Gürtellage grenzen. Der zweite Abschnitt der Gürtellage kann in Umfangsrichtung zu beiden Seiten an einen ersten Abschnitt der Gürtellage grenzen. Dies kann in einer Gürtellage mit einem einzigen ersten und einem einzigen zweiten Abschnitt erfüllt sein, wobei dann der erste Abschnitt zu beiden Umfangsseiten an den zweiten Abschnitt grenzen würde und andersherum. Alternativ kann die Gürtellage mehrere erste und/oder zweite Abschnitte mit den in Anspruch 1 beschriebenen Merkmalen des ersten bzw. zweiten Abschnitts umfassen. Gemäß einer Ausführungsform besteht die Gürtellage ausschließlich aus solchen ersten und zweiten Abschnitten. Die Gürtellage kann eine Anzahl n von ersten Abschnitten und eine Anzahl m von zweiten Abschnitten umfassen. Hierbei kann die Anzahl n einer natürlichen Zahl zwischen 1 und 30, vorzugsweise zwischen 3 und 15 entsprechen und/oder die Anzahl m kann einer natürlichen Zahl zwischen 1 und 30, vorzugsweise zwischen 3 und 15 entsprechen. Durch eine möglichst große, über die Gürtellage verteilte Anzahl an ersten Abschnitten kann über den gesamten Reifen ein gleichmäßig niedriger Rollwiderstand erzielt werden. Durch eine möglichst große, über die Gürtellage verteilte Anzahl an zweiten Abschnitten kann die Anzahl möglicher Leitfähigkeitsbrücken durch den Reifen erhöht werden. Eine niedrige Gesamtzahl an Abschnitten ist wiederum der Festigkeit des Reifens zuträglich und vereinfacht die Herstellung der Gürtellage. In den genannten Bereichen können in Hinblick auf die genannten Vor- bzw. Nachteile gute Kompromisse gefunden werden.

Die Erfindung betrifft weiterhin einen Gürtelverband für einen Fahrzeugreifen. Der Gürtelverband umfasst wenigstens eine und vorzugsweise wenigstens zwei der vor- und/oder nachstehend beschriebenen erfindungsgemäßen Gürtellagen. Im Falle eines Gürtelverbandes aus zwei oder mehr erfindungsgemäßen Gürtellagen können die Gürtellagen in Radialrichtung übereinander angeordnet sein, wobei der zweite Abschnitt einer radial unteren Gürtellage mit dem zweiten Abschnitt einer radial jeweils unmittelbar oberhalb angeordneten Gürtellage in direktem elektrischem Kontakt steht. Auf diese Weise kann eine in radialer Richtung durch den Gürtelverband verlaufende elektrische Brücke gebildet werden.

Die Festigkeitsträger in der ersten Gürtellage können unter einer entgegengesetzten Steigung zu den Festigkeitsträgern in der zweiten Gürtellage verlaufen. Dies entspricht einer an sich bekannten Anordnung, die für eine Festigkeit des Gürtelverbands von Vorteil sein kann. Erfindungsgemäß entsteht in Kombination mit den gekreuzt verlaufenden Festigkeitsträgern ein synergetischer Vorteil, wenn auch eine Grenze zwischen dem ersten Abschnitt und dem zweiten Abschnitt in beiden Gürtellagen jeweils parallel zu dem Verlauf der jeweiligen Festigkeitsträger verläuft: Würden zwei streifenförmige zweite Abschnitte in der ersten und zweiten Gürtellage unter einer gleichen Steigung verlaufen, gäbe es mehr relative Umfangspositionen, unter denen die beiden zweiten Abschnitte einander nicht überlappen würden, als bei unter entgegengesetzter Steigung verlaufenden streifenförmigen Abschnitten.

Zweite Abschnitte der ersten Gürtellage und zweite Abschnitte der zweiten Gürtellage stehen in einer Anzahl von k voneinander getrennter Kontaktbereiche in direktem elektrischem Kontakt zueinander, wobei k vorzugsweise einer natürlichen Zahl zwischen 1 und 100, weiter vorzugsweise zwischen 2 und 10 entspricht. In einer Ausführungsform steht jeweils ein zweiter Abschnitt der ersten Gürtellage mit einem zweiten Abschnitt der zweiten Gürtellage in Kontakt. Ein Kontaktbereich kann dem Bereich eines Überlapps zwischen zwei zweiten Abschnitten entsprechen. Wenn die zweiten Abschnitte jeweils eine Streifenform aufweisen, kann ein Kontaktbereich in einer von der Axial- und Umfangsrichtung aufgespannten Fläche rautenförmig sein.

Wenigstens einer der Kontaktbereiche kann vollständig innerhalb eines axialen Abstands von maximal 30% einer axialen Breite des Gürtelverbands von einer axialen Mitte des Gürtelverbands angeordnet sein. Vorzugsweise gilt dies für alle Kontaktbereiche. Weiter vorzugsweise schneidet die axiale Mitte des Gürtelverbandes den wenigstens einen und vorzugsweise alle Kontaktbereiche. Durch eine Anordnung der Kontaktbereiche in der Nähe eines Reifenäquators kann eine Nähe zu einem aus Fahrzeugreifen grundsätzlich bekannten Carbon Center Beam hergestellt werden, wodurch die Länge eines elektrischen Pfades durch den Reifen verringert werden kann. Zusätzlich kann durch eine Anordnung der Kontaktbereiche in einem axial zentralen Bereich erreicht werden, den Anteil zur Optimierung eines Rollwiderstandes weniger geeigneter Gummimischungen der zweiten Abschnitte in den Schulterbereichen zu verringern; insbesondere in den Schulterbereichen kann es bei hohen Geschwindigkeiten zu starker Wärmeentwicklung, bedingt durch Hystereseeffekte kommen, was durch den vornehmlichen Einsatz der rollwiderstandsoptimierten Gummimischungen der ersten Abschnitte abgemildert werden kann.

Die Erfindung betrifft außerdem einen Fahrzeugreifen mit einer Gürtellage und/oder einem Gürtelverband gemäß vor- und/oder nachstehender Beschreibung. Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

Der Fahrzeugreifen kann eine Gürtelbandage umfassen, wobei die Gürtelbandage radial oberhalb der Gürtellage oder des Gürtelverbands angeordnet sein kann. Die Gürtelbandage kann einen ersten Abschnitt und einen zweiten Abschnitt umfassen, wobei der erste Abschnitt elektrisch nichtleitend ausgebildet ist und wobei der zweite Abschnitt elektrisch leitend ausgebildet ist. Vorzugsweise steht hierbei der zweite Abschnitt der Gürtelbandage mit dem zweiten Abschnitt der Gürtellage bzw. mit dem zweiten Abschnitt einer der Gürtellagen in dem Gürtelverband in elektrischem Kontakt. Auf diese Weise kann eine elektrische Brücke durch den Gürtelverband und die Gürtelbandage hergestellt werden.

Die Gürtelbandage kann als Spulbandage ausgebildet sein. Eine Spulbandage ist eine aus einer aufzuspulenden Länge über den Gürtelverband gespulte Gürtelbandage. Die Spulbandage kann Festigkeitsträger umfassen, welche die aufzuspulende Länge vorzugsweise als entlang der Längsrichtung der aufzuspulenden Länge zusammenhängende Korde durchlaufen und beispielsweise aus Aramid, Nylon, PET oder Mischungen dieser Materialien bestehen können. Die aufgespulte Länge kann in einem größeren absoluten Winkel zur Axialrichtung verlaufen kann, als die Festigkeitsträger der Gürtellagen. Der zweite Abschnitt der Gürtelbandage kann axial von zwei ersten Abschnitten der Gürtelbandage begrenzt sein. Der zweite Abschnitt einer ersten Gürtellage, der zweite Abschnitt einer zweiten Gürtellage und der zweite Abschnitt der Gürtelbandage können einander überlappen. Der zweite Abschnitt der Gürtelbandage kann sich mit mehreren, vorzugsweise mit allen Kontaktbereiche zwischen den zweiten Abschnitten der Gürtellagen überlappen.

Der Fahrzeugreifen kann einen elektrisch nichtleitenden Laufstreifen umfassen, wobei sich ein elektrisch leitender Kanal radial durch den Lauftreifen erstreckt. Ein elektrisch nichtleitender Laufstreifen kann wenigstens entweder eine Cap oder eine Base umfassen, die jeweils für sich genommen auf einer elektrisch nicht leitfähigen Gummimischung basieren. Vorzugsweise sind sowohl die Cap als auch die Base des Laufstreifens auf einen niedrigen Rollwiderstand optimiert und basieren im Gegenzug beide auf elektrisch nicht leitfähigen Gummimischungen. Der elektrisch leitende Kanal kann sich von einer Lauffläche an einer radialen Oberseite der Cap durch die Cap und die Base bis zu einer radialen Unterseite der Base erstrecken und kann sich über den gesamten Umfang des Fahrzeugreifens erstrecken. Insbesondere kann der elektrisch leitende Kanal als an sich bekannter Carbon Center Beam ausgeführt sein. Der elektrisch leitende Kanal kann den zweiten Abschnitt der Gürtelbandage elektrisch leitend kontaktieren und insbesondere in direktem mechanischem Kontakt elektrisch leitend kontaktieren.

Der Fahrzeugreifen kann eine Seitenwand umfassen, wobei die Seitenwand auf einer elektrisch nicht leitfähigen Gummimischung basieren kann. Der Fahrzeugreifen kann eine Karkasse umfassen, wobei die Karkasse auf einer elektrisch leitfähigen Gummimischung basieren kann. Insgesamt kann ein zusammenhängender elektrisch leitender Pfad durch den Laufstreifen, die Gürtelbandage, den Gürtelverband und die Karkasse verlaufen. Auf die beschriebene Weise kann elektrische Ladung zwischen einer Felge, die mit der Karkasse leitend verbunden sein kann, und einem Fahrbahnuntergrund, der mit dem elektrisch leitenden Kanal durch den Laufstreifen in Kontakt stehen kann, verschoben und abgeleitet werden. Die elektrisch leitenden Teilpfade zwischen dem zweiten Abschnitt einer radial oberen Gürtellage des Gürtelverbands und dem Fahrbahnuntergrund auf der einen Seite sowie zwischen dem zweiten Abschnitt einer radial unteren Gürtellage des Gürtelverbands und der Felge auf der anderen Seite können auch unter Einsatz alternativer Strukturen umgesetzt werden. Beispielsweise können die Gürtelbandage und/oder die Karkasse auf elektrisch nicht leitfähigen Gummimischungen basieren, wobei elektrisch leitende Pfade beispielsweise unter Zuhilfenahme elektrisch leitender Garne hergestellt werden können.

Insgesamt sollten die spezifischen Widerstände und Dimensionen der den elektrisch leitenden Pfad zwischen Fahrbahn und Felge definierenden Baugruppen so bemessen sein, dass der elektrisch leitende Pfad einen Widerstand von weniger als 1×10¹⁰ Ω, vorzugsweise von weniger als 1×10⁸ Ω, weiter vorzugsweise von weniger als 1×10⁶ Ω hat.

Die Erfindung betrifft außerdem ein Verfahren zur Herstellung einer Gürtellage gemäß vor- und/oder nachstehender Beschreibung. Hierzu werden ein erster Abschnitt und ein zweiter Abschnitt bereitgestellt und daraufhin miteinander verbunden.

Der erste Abschnitt kann dadurch bereitgestellt werden, dass der erste Abschnitt unter einem Winkel zwischen 5° und 85° zu einem Verlauf der Festigkeitsträger in dem ersten Abschnitt von einer ersten Kordbahn abgetrennt wird. Dies kann auf einer Produktionsstraße an sich bekannter Art erfolgen, wobei der Kordzuschnitt auf an sich bekannte Weise erfolgen kann, indem eine ersten Kordbahn in einem vorgegebenen Winkel in ersten Abschnitte gestanzt werden kann, die jeweils der axialen Breite der Gürtellage entsprechen. Der zweite Abschnitt kann dadurch bereitgestellt werden, dass der zweite Abschnitt unter einem Winkel zwischen 5° und 85° zu einem Verlauf der Festigkeitsträger in dem zweiten Abschnitt von einer zweiten Kordbahn abgetrennt wird. Hierbei kann die zweite Kordbahn in einem vorgegebenen Winkel in zweite Abschnitte gestanzt werden, die jeweils der axialen Breite der Gürtellage entsprechen.

Der zweite Abschnitt wird vorzugsweise unter dem gleichen Winkel von der zweiten Kordbahn abgetrennt wie der erste Abschnitt von der ersten Kordbahn. Der zweite Abschnitt wird vorzugsweise mit parallel zu den Festigkeitsträgern in dem ersten Abschnitt ausgerichteten Festigkeitsträgern bereitgestellt. Die erste und zweite Kordbahn können parallel zueinander abgewickelt werden und mit der gleichen Vorrichtung zugeschnitten werden. Insbesondere können die ersten und zweiten Abschnitte gleichzeitig von den entsprechenden Kordbahnen abgetrennt werden.

Der erste Abschnitt und der zweite Abschnitt können durch ein Spliceverfahren miteinander verbunden werden. Insbesondere können mehrere erste und zweite Abschnitte alternierend auf an sich bekannte Weise mittels einer Splicerolle auf Stoß zusammengesetzt werden, sodass ein kantengerades Endlosband entsteht, welches beispielsweise zur ersten und/oder zweiten Gürtellage weiterverarbeitet werden kann.

Das Verfahren kann mit weiteren Merkmalen fortgebildet werden, die im Zusammenhang mit dem erfindungsgemäßen Fahrzeugreifen, dem erfindungsgemäßen Gürtelverband und/oder der erfindungsgemäßen Gürtelbandage beschrieben sind. Der Fahrzeugreifen, der Gürtelverband und/oder die Gürtellage können mit weiteren Merkmalen fortgebildet werden, die im Zusammenhang mit dem erfindungsgemäßen Verfahren beschrieben sind. Fahrzeugreifen, Gürtelverband und Gürtellage können jeweils mit Merkmalen fortgebildet werden, die im Zusammenhang mit den zwei anderen Erzeugnissen beschrieben sind.

Die Erfindung wird nachfolgend unter Bezugnahme auf die beigefügten Zeichnungen anhand vorteilhafter Ausführungsformen beispielhaft beschrieben. Es zeigen:
Figur 1 schematisch ein Ersatzschaltbild für einen elektrischen Pfad durch eine Ausführungsform eines erfindungsgemäßen Fahrzeugreifens,
Figur 2 schematisch eine Ausführungsform einer erfindungsgemäßen ersten Gürtellage,
Figur 3 schematisch eine Ausführungsform einer erfindungsgemäßen zweiten Gürtellage,
Figur 4 schematisch eine Ausführungsform eines erfindungsgemäßen Gürtelverbands,
Figur 5 schematisch eine Ausführungsform eines erfindungsgemäßen Gürtelverbands mit einer Gürtelbandage,
Figur 6 schematisch eine zur Herstellung einer Ausführungsform einer erfindungsgemäßen Gürtellage geeignete Produktionsstraße.

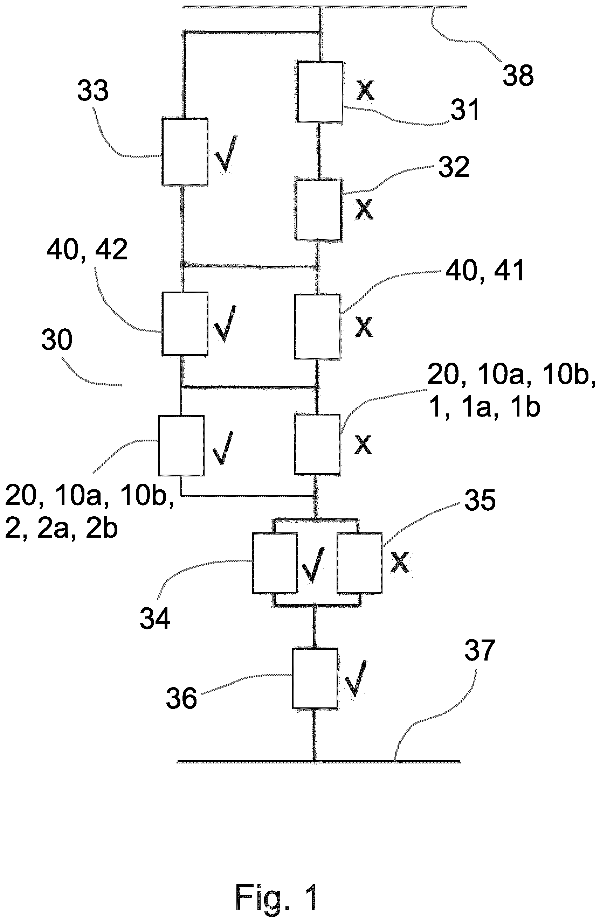

Figur 1 zeigt als schematisches Schaltbild einen elektrischen Pfad durch einen Fahrzeugreifen 30, zwischen einer Fahrbahn 38 und einer Felge 37. Jedes der eingezeichneten Rechtecke repräsentiert einen elektrischen Widerstand einer Baugruppe in dem Fahrzeugreifen 30. Durch ein Kreuz neben einem Rechteck wird bezeichnet, dass diese Baugruppe auf einer elektrisch nicht leitfähigen Gummimischung basiert, sodass die Baugruppe kein maßgeblicher Teil eines elektrischen Pfads durch den Fahrzeugreifen 30 ist. Ein Haken neben einem Rechteck indiziert, dass diese Baugruppe auf einer elektrisch leitfähigen Gummimischung basiert, sodass die Baugruppe maßgeblicher Teil eines elektrischen Pfads durch den Fahrzeugreifen 30 ist.

Der Fahrzeugreifen umfasst einen Laufsteifen, welcher eine Cap 31 und eine Base 32 umfasst, wobei Cap 31 und Base 32 auf Rollwiderstand optimierte Gummimischungen enthalten, die elektrisch nicht leitfähig sind. Der Laufstreifen 31, 32 wird von einem elektrisch leitenden Kanal 33 überbrückt, wobei der elektrisch leitende Kanal 33 beispielsweise als Carbon Center Beam 33 ausgebildet sein kann, welcher sowohl die Cap 31 als auch die Base 32 elektrisch radial überbrückt. Eine Gürtelbandage 40 ist in einen ersten und einen zweiten Abschnitt 41, 42 unterteilt, wobei der erste Abschnitt 41 elektrisch nichtleitend ist und eine auf Rollwiderstand optimierte Gummimischung enthält. Der zweite Abschnitt 42 basiert auf einer elektrisch leitfähigen Gummimischung und stellt eine elektrische Verbindung zwischen dem Carbon Center Beam 33 und einem Gürtelverband 20 her. Der Gürtelverband 20 kann mehrere Gürtellagen 10, 10a, 10b umfassen. Erste Abschnitte 1, 1a, 1b der Gürtellagen 10, 10a, 10b basieren auf elektrisch nicht leitfähigen Gummimischungen 11; zweite Abschnitte 2, 2a, 2b der Gürtellagen 10, 10a, 10b basieren auf elektrisch leitfähigen Gummimischungen 12.

Wenn der Gürtelverband 20 mehrere radial übereinander angeordnete Gürtellagen 10a, 10b umfasst, können die zweiten Abschnitte 2a, 2b so angeordnet sein, dass eine radial durchgängige elektrische Verbindung zwischen der Gürtelbandage 40 und einer Karkasse 34 hergestellt wird, wobei die Karkasse 34 in dem dargestellten Beispiel auf einer leitfähigen Gummimischung basiert. Eine Seitenwand 35 basiert in dem gezeigten Beispiel hingegen auf einer elektrisch nicht leitfähigen, auf Rollwiderstand optimierten Gummimischung. Die Karkasse 34 schafft eine elektrische Brücke zwischen dem Gürtelverband 20 und einer elektrisch leitenden Felgenleiste 36, die wiederum elektrisch leitend mit der Felge 37 verbunden ist. Durch die erfindungsgemäße Ausführung mit ersten Abschnitten 1, 1a, 1b und zweiten Abschnitten 2, 2a, 2b der Gürtellagen 10, 10a, 10b kann der Gürtelverband 20 einerseits zu einem niedrigen Rollwiderstand des Fahrzeugreifens 30 beitragen; andererseits kann beispielsweise gemäß dem in Figur 1 dargestellten elektrischen Pfad gezielt eine elektrische Brücke in dem Gürtelverband 20 implementiert werden.

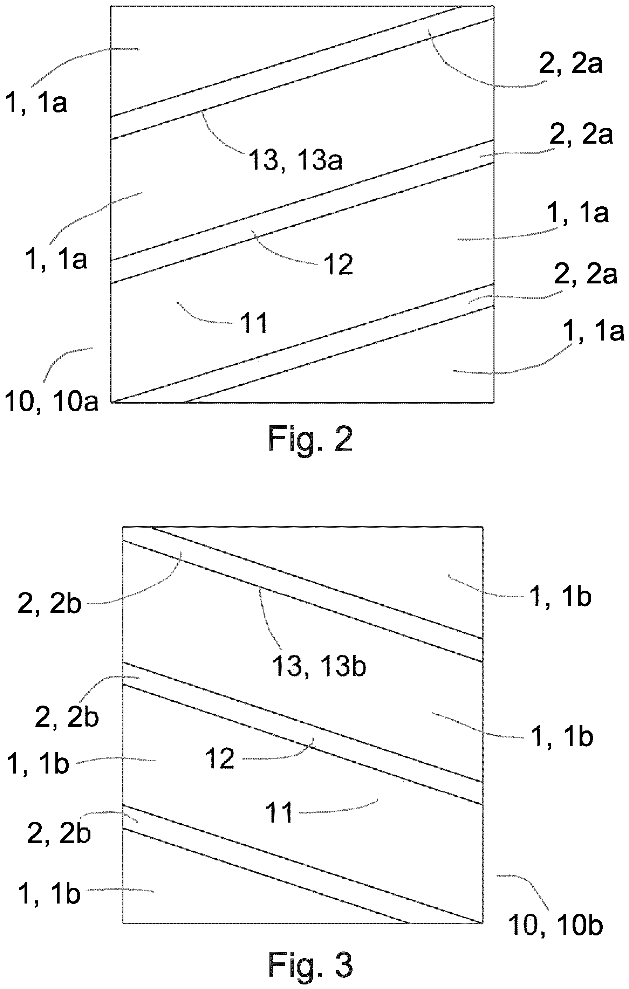

Figur 2 zeigt schematisch eine Ausführungsform einer erfindungsgemäßen ersten Gürtellage 10a. Von links nach rechts ist die gesamte axiale Breite der Gürtellage 10a abgebildet, wobei in der Zeichnungsebene von oben nach unten die Umfangserstreckung der Gürtellage über 360° dargestellt ist. Die Axialrichtung und Umfangsrichtung sind in der Abbildung nicht im tatsächlichen Skalenverhältnis dargestellt, wobei die Axialrichtung zur besseren Übersicht stark vergrößert dargestellt ist. Die Gürtellage 10a umfasst drei streifenförmige, unter einem Winkel zur Axialrichtung verlaufende zweite Abschnitte 2a, welche auf einer leitfähigen Gummimischung 12 basieren. Lückenlos an die zweiten Abschnitte 2a anschließend sind erste Abschnitte 1a ausgebildet, welche die restliche Fläche der Gürtellage 10a ausmachen und auf einer nicht leitfähigen, auf Rollwiderstand optimierten Gummimischung 11 basieren. Die Gürtellage 10a umfasst in beiden Abschnitten 1a, 2a parallel zueinander angeordnete Festigkeitsträger 13a, deren Längsverlauf in Figur 2 stellvertretend an den Grenzen zwischen den Abschnitten 1a, 2a angedeutet ist.

Figur 3 zeigt in einer zu Figur 2 vergleichbaren Ansicht eine zweit Gürtellage 10b. Die zweite Gürtellage 10b ist mit ersten Abschnitten 1b, zweiten Abschnitten 2b, entsprechenden Gummimischungen 11, 12 und Festigkeitsträgern 13b im Prinzip identisch zur ersten Gürtellage 10a aufgebaut. Der Verlauf der Festigkeitsträger 13a, 13b und die Grenzverläufe zwischen den ersten Abschnitten 1a, 1b und zweiten Abschnitten 2a, 2b sind jedoch in der ersten und zweiten Gürtellage 10a, 10b gemäß den gezeigten Ausführungsformen im Wesentlichen spiegelverkehrt ausgebildet. In alternativen Ausführungsformen können die Festigkeitsträger 13a, 13b und Grenzverläufe in den beiden Gürtellagen 10a, 10b ebenfalls gekreuzt zueinander ausgebildet sein, müssen jedoch nicht notwendigerweise gespiegelt zueinander sein.

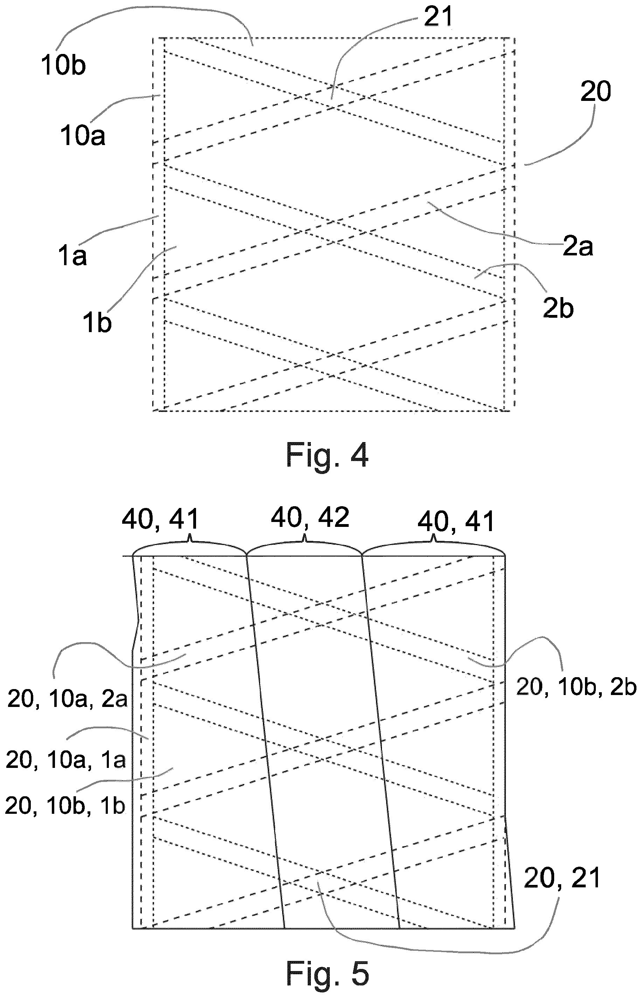

Figur 4 zeigt die beiden Gürtellagen 10a, 10b gemäß den Figuren 2 und 3 radial übereinandergestapelt in einem Gürtelverband 20. Es ergeben sich Kontaktbereiche 21 in Bereichen eines Überlapps zwischen den zweiten Abschnitten 2a, 2b der beiden Gürtellagen 10a, 10b. Mit diesen Kontaktbereiche 21 werden den Gürtelverband 20 radial durchdringende Leitfähigkeitskanäle zur Verfügung gestellt.

Figur 5 zeigt schematisch und ausschnittsweise den Gürtelverband 20 gemäß Figur 4 mit einer radial darüber angeordneten Gürtelbandage 40. Die Gürtelbandage 40 umfasst einen zweiten Abschnitt 42, der auf einer elektrisch leitfähigen Gummimischung basiert sowie zwei den zweiten Abschnitt 42 axial einrahmende erste Abschnitte 41, welche jeweils auf einer elektrisch nicht leitfähigen, auf Rollwiderstand optimierten Gummimischung basieren. Die Gürtelbandage 40 ist in dem gezeigten Beispiel als Spulbandage ausgebildet, wobei die Steigung der Wicklungen der Spulbandage den eingezeichneten Grenzverläufen zwischen den Abschnitten 41, 42 entspricht. Dadurch, dass der zweite Abschnitt 42 der Gürtelbandage 40 die Kontaktbereiche 21 des Gürtelverbandes 20 überlappt, ist ein radial durchgehender, elektrisch leitender Pfad durch die Gürtelbandage 40 und den Gürtelverband 20 gewährleistet, der nach radial oben beispielsweise durch einen Carbon Center Beam 33 (vgl. Figur 1) fortgesetzt werden kann.

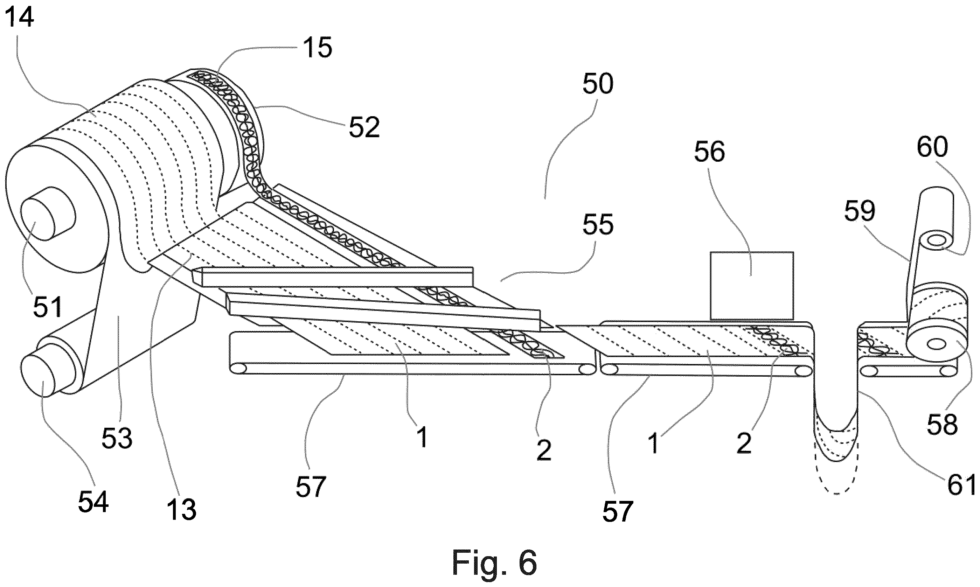

Figur 6 zeigt schematisch eine Produktionsstraße 50, auf der das erfindungsgemäße Verfahren zur Herstellung einer Gürtellage 10 durchgeführt werden kann. Am Eingang der Produktionsstraße 50 ist eine Rolle 51 angeordnet, von der eine erste Kordbahn 14 abgewickelt wird. In an sich bekannter Weise wird eine beim Abwickeln der Kordbahn 14 freiwerdende, zum Schutz und zur Trennung der einzelnen Wicklungen der Kordbahn 14 bestimmte Zwischenlage 53 auf eine Mitläuferrolle 54 aufgewickelt. Von der gleichen oder einer zusätzlichen Rolle 52 wird eine zweite Kordbahn 15 abgewickelt, wobei die zweite Kordbahn 15 zur besseren Unterscheidbarkeit von der ersten Kordbahn 14 mit geschwungenen Linien schraffiert dargestellt ist. Die erste und die zweite Kordbahn 14, 15 werden vorzugsweise parallel zueinander abgewickelt. Der Verlauf in den Kordbahnen 14, 15 angeordneter Festigkeitsträger 13 ist in Figur 6 nur schematisch, anhand gestrichelter Linien dargestellt, wobei die Flächendichte der Festigkeitsträger 13 in den Kordbahnen 14, 15 bei den meisten Ausführungsformen größer als die Dichte der gestrichelten Linien in Figur 6 sein wird.

In einer Stanzstation 55 werden die Kordbahnen 14, 15 in Abschnitte 1, 2 gestanzt, wobei die Abschnitte 1, 2 jeweils eine der herzustellenden Gürtellage 10 entsprechende axiale Breite aufweisen. Die Kordbahnen 14, 15 werden unter einem von 90° verschiedenen Winkel gegenüber dem Verlauf der Festigkeitsträger 13 in den Kordbahnen 14, 15 durchtrennt, sodass sich für die Abschnitte 1, 2 jeweils die Form eines Parallelogramms ergibt. Die einzelnen solchermaßen gestanzten Abschnitte 1, 2 werden daraufhin an einer in Figur 6 nur schematisch als Black Box dargestellten Splicestation 56 auf Stoß zusammengesetzt, sodass ein kantengerades Endlosband 61 entsteht, welches zu einer ersten und/oder zweiten Gürtellage 10, 10a, 10b zurechtgeschnitten und weiterverarbeitet werden kann.

Die Abschnitte 1, 2 werden auf an sich bekannte Weise anhand von Förderbändern 57 durch die Produktionsstraße 50 geführt. Am Ende der Produktionsstraße 50 wird das zusammengesetzte Band 61 aus Abschnitten 1, 2 auf eine Kassette 58 aufgespult, wobei eine Zwischenlage 59 zum Schutz und zur Trennung der einzelnen Wicklungen von einem Mitläufer 60 aus gespeist wird.

### Bezugszeichenliste

- 1: erster Abschnitt der Gürtellage
- 1a: erster Abschnitt der ersten Gürtellage
- 1b: erster Abschnitt der zweiten Gürtellage
- 2: zweiter Abschnitt der Gürtellage
- 2a: zweiter Abschnitt der ersten Gürtellage
- 2b: zweiter Abschnitt der zweiten Gürtellage
- 10: Gürtellage
- 10a: erste Gürtellage
- 10b: zweite Gürtellage
- 11: Gummimischung (nicht leitfähig)
- 12: Gummimischung (leitfähig)
- 13: Festigkeitsträger
- 13a: Festigkeitsträger in der ersten Gürtellage
- 13b: Festigkeitsträger in der zweiten Gürtellage
- 14: erste Kordbahn
- 15: zweite Kordbahn
- 20: Gürtelverband
- 21: Kontaktbereich
- 30: Fahrzeugreifen
- 31: Cap (Laufstreifen)
- 32: Base (Laufstreifen)
- 33: Leitfähigkeitskanal (Carbon Center Beam)
- 34: Karkasse
- 35: Seitenwand
- 36: Felgenleiste
- 37: Felge
- 38: Fahrbahn
- 40: Gürtelbandage
- 41: erster Abschnitt der Gürtelbandage
- 42: zweiter Abschnitt der Gürtelbandage
- 50: Produktionsstraße
- 51: Rolle (für Kordbahn 14)
- 52: Rolle (für Kordbahn 15)
- 53: Zwischenlage (zum Wickeln von Kordbahn 15)
- 54: Mitläuferrolle (zu Rolle 51)
- 55: Stanzstation
- 56: Splicestation
- 57: Förderband
- 58: Kassette
- 59: Zwischenlage (zum Wickeln des Endlosbandes aus Abschnitten 1, 2)
- 60: Mitläuferrolle (zu Kassette 58)
- 61: kantengerades Endlosband

## Patentansprüche

1. Gürtellage (10, 10a, 10b) für einen Fahrzeugreifen (30), wobei die Gürtellage (10, 10a, 10b) in eine Gummimischung (11, 12) eingebettete Festigkeitsträger (13, 13a, 13b) umfasst, wobei die Gummimischung (11) in einem ersten Abschnitt (1, 1a, 1b) der Gürtellage (10, 10a, 10b) elektrisch nicht leitfähig ist,
**dadurch gekennzeichnet,**
**dass** die Gummimischung (12) in einem zweiten Abschnitt (2, 2a, 2b) der Gürtellage (10, 10a, 10b) elektrisch leitfähig ist.

2. Gürtellage (10, 10a, 10b) nach Anspruch 1, **dadurch gekennzeichnet, dass** die Gummimischung (11) in dem ersten Abschnitt (1) eine bessere Eignung zur Minimierung eines Rollwiderstands des Fahrzeugreifens (30) aufweist als die Gummimischung (12) in dem zweiten Abschnitt (2).

3. Gürtellage (10, 10a, 10b) nach einem der Ansprüche 1 oder 2, **dadurch gekennzeichnet, dass** eine Grenze zwischen dem ersten Abschnitt (1, 1a, 1b) und dem zweiten Abschnitt (2, 2a, 2b) parallel zu einem Verlauf der Festigkeitsträger (13, 13a, 13b) in dem ersten Abschnitt (1, 1a, 1b) und dem zweiten Abschnitt (2, 2a, 2b) verläuft.

4. Gürtellage (10, 10a, 10b) nach einem der Ansprüche 1 bis 3, **dadurch gekennzeichnet, dass** der erste Abschnitt (1, 1a, 1b) in Umfangsrichtung zu beiden Seiten an einen zweiten Abschnitt (2, 2a, 2b) grenzt, wobei der zweite Abschnitt (2, 2a, 2b) in Umfangsrichtung zu beiden Seiten an einen ersten Abschnitt (1, 1a, 1b) grenzt.

5. Gürtellage (10, 10a, 10b) nach einem der Ansprüche 1 bis 4, **dadurch gekennzeichnet, dass** die Gürtellage (10, 10a, 10b) eine Anzahl n von ersten Abschnitten (1, 1a, 1b) und eine Anzahl m von zweiten Abschnitten (2, 2a, 2b) umfasst.

6. Gürtellage (10, 10a, 10b) nach Anspruch 5, **dadurch gekennzeichnet, dass** die Anzahl n einer natürlichen Zahl zwischen 1 und 30, vorzugsweise zwischen 3 und 15 entspricht, wobei die Anzahl m einer natürlichen Zahl zwischen 1 und 30, vorzugsweise zwischen 3 und 15 entspricht.

7. Gürtelverband (20) mit zwei Gürtellagen (10a, 10b) nach einem der Ansprüche 1 bis 6, **dadurch gekennzeichnet, dass** die Gürtellagen (10a, 10b) in Radialrichtung übereinander angeordnet sind, wobei der zweite Abschnitt (2a) der ersten Gürtellage (10a) mit dem zweiten Abschnitt (2b) der zweiten Gürtellage (10b) in direktem elektrischem Kontakt steht.

8. Gürtelverband (20) nach Anspruch 7, **dadurch gekennzeichnet, dass** die Festigkeitsträger (13a) in der ersten Gürtellage (10a) unter einer entgegengesetzten Steigung zu den Festigkeitsträgern (13b) in der zweiten Gürtellage (10b) verlaufen.

9. Gürtelverband (20) nach einem der Ansprüche 7 oder 8, **dadurch gekennzeichnet, dass** zweite Abschnitte (2a) der ersten Gürtellage (10a) und zweite Abschnitte (2b) der zweiten Gürtellage (10b) an einer Anzahl k voneinander getrennter Kontaktbereiche (21) in direktem elektrischem Kontakt stehen, wobei k einer natürlichen Zahl zwischen 1 und 100, vorzugsweise zwischen 2 und 10 entspricht.

10. Gürtelverband (20) nach Anspruch 9, **dadurch gekennzeichnet, dass** wenigstens einer der Kontaktbereiche (21) vollständig innerhalb eines axialen Abstands von maximal 30% einer axialen Breite des Gürtelverbands (20) von einer axialen Mitte des Gürtelverbands(20) angeordnet ist.

11. Fahrzeugreifen (30) mit einer Gürtellage (10, 10a, 10b) und/oder einem Gürtelverband (20) nach einem der Ansprüche 1 bis 10.

12. Fahrzeugreifen (30) nach Anspruch 11, **dadurch gekennzeichnet, dass** der Fahrzeugreifen eine Gürtelbandage (40) umfasst, wobei die Gürtelbandage (40) radial oberhalb der Gürtellage (10, 10a, 10b) oder des Gürtelverbands (20) angeordnet ist, wobei die Gürtelbandage (40) einen ersten Abschnitt (41) und einen zweiten Abschnitt (42) umfasst, wobei der erste Abschnitt (41) elektrisch nicht leitend ausgebildet ist und wobei der zweite Abschnitt (42) elektrisch leitend ausgebildet ist, wobei der zweite Abschnitt (42) der Gürtelbandage mit dem zweiten Abschnitt (2, 2a, 2b) der Gürtellage (10, 10a, 10b) bzw. mit dem zweiten Abschnitt einer der Gürtellagen (10, 10a, 10b) in dem Gürtelverband (20) in elektrischem Kontakt steht.

13. Verfahren zur Herstellung einer Gürtellage (10, 10a, 10b) gemäß einem der Ansprüche 1 bis 6,
**dadurch gekennzeichnet,**
**dass** ein erster Abschnitt (1, 1a, 1b) und ein zweiter Abschnitt (2, 2a, 2b) bereitgestellt und miteinander verbunden werden.

14. Verfahren gemäß Anspruch 13, wobei der erste Abschnitt (1, 1a, 1b) dadurch bereitgestellt wird, dass der erste Abschnitt unter einem Winkel zwischen 5° und 85° zu einem Verlauf der Festigkeitsträger (13, 13a, 13b) in dem ersten Abschnitt (1, 1a, 1b) von einer ersten Kordbahn (14) abgetrennt wird, wobei der zweite Abschnitt (2, 2a, 2b) dadurch bereitgestellt wird, dass der zweite Abschnitt (2, 2a, 2b) unter einem Winkel zwischen 5° und 85° zu einem Verlauf der Festigkeitsträger (13, 13a, 13b) in dem zweiten Abschnitt (1, 1a, 1b) von einer zweiten Kordbahn (15) abgetrennt wird.

15. Verfahren gemäß einem der Ansprüche 13 oder 14, wobei der erste Abschnitt (1, 1a, 1b) und der zweite Abschnitt (2, 2a, 2b) durch ein Spliceverfahren miteinander verbunden werden.
